# FASCICULE DE BREVET EUROPEEN

(11) **EP 3 861 216 B1**
(45) Date de publication et mention de la délivrance du brevet: **15.06.2022**
(21) Numéro de dépôt: 19782604.3
(22) Date de dépôt: 04.10.2019
(51) Int. Cl.: F16B 2/22, B60R 19/48, B60D 1/60, B60R 19/02

(54) **DISPOSITIF DE RETENUE D'UNE TRAPPE D'OBTURATION D'UNE OUVERTURE FORMÉE DANS UNE PAROI D'UNE PIÈCE DE CARROSSERIE**
VORRICHTUNG ZUM HALTEN EINES VERSCHLUSSES EINER ÖFFNUNG, DIE IN EINER WAND EINES KAROSSERIETEILS GEFORMT IST
DEVICE FOR RETAINING A SHUTTER OF AN OPENING FORMED IN A WALL OF A BODYWORK PART

(30) Priorité: 05.10.2018 FR 1859259
(43) Date de publication de la demande: 11.08.2021
(73) Titulaire: Compagnie Plastic Omnium, 69007 Lyon (FR)
(72) Inventeur: PLACE, Jean-François, 01150 SAINTE-JULIE (FR)
(74) Mandataire: LLR
(86) Numéro de dépôt international: PCT/EP2019/076966
(87) Numéro de publication internationale: WO 2020/070314

(56) Documents cités:
- DE-B- 1 103 058
- FR-A1- 2 921 624
- FR-A1- 2 985 488
- FR-A1- 3 061 248

## Description

La présente invention concerne le domaine des pièces de carrosserie de véhicule automobile comportant une ouverture apte à être obturée par une trappe.

En particulier, l'invention concerne un moyen d'attache de la trappe à la pièce lorsque la trappe n'est pas en position d'obturation de l'ouverture.

Une telle pièce de carrosserie est par exemple destinée à être disposée en regard d'une poutre de pare-chocs avant ou arrière de véhicule automobile. On connaît notamment des véhicules automobiles comprenant un anneau de remorquage fixé sur la poutre de pare-chocs avant, la pièce de carrosserie ou peau de pare-chocs étant disposée devant l'anneau de remorquage. Une ouverture est, de la sorte, ménagée dans la pièce de carrosserie pour offrir un accès à l'anneau de remorquage en cas de besoin, par exemple pour remorquer le véhicule automobile à la suite d'une panne de celui-ci. En outre, cet anneau de remorquage est très souvent utilisé pour arrimer le véhicule durant la phase de livraison (camion, bateau, etc.).

Dans un but esthétique, l'ouverture de la pièce de carrosserie est fermée par une trappe. De façon classique, la trappe est retenue à la pièce de carrosserie en position d'obturation par au moins un ergot encliqueté en force, de façon à ce que la trappe soit suffisamment maintenue dans l'ouverture.

Lorsque la trappe n'est plus en position d'obturation, elle n'est plus attachée à la pièce. Il y a donc un risque de perte de cet élément.

Pour éviter que la trappe ne soit perdue, il est connu de munir la trappe d'un cordon de retenue. Ce cordon est lié, du côté non visible de la pièce de carrosserie, d'une part à la trappe, et d'autre part à la paroi de la pièce. La fixation se fait au moyen d'un élément d'attache (ou ancre), positionné à l'extrémité du cordon opposée à la trappe, qui vient se loger dans un logement de la paroi.

Il est cependant parfois nécessaire de détacher totalement la trappe de la paroi, pour l'arrimage des véhicules sur des camions ou des bateaux par exemple. Il faut dans ce cas que l'élément d'attache soit facile à monter et difficile à démonter, pour éviter tout démontage non intentionnel, sans pour autant détruire cet élément au démontage.

La facilité et la répétabilité de ces opérations de montage/démontage de l'élément d'attache dans le logement sont conditionnées par la géométrie de l'élément d'attache.

Il existe une multitude de géométrie d'élément d'attache sur le marché. Cependant, aucune ne donne satisfaction à la fois pour le montage et pour le démontage. En effet, les éléments d'attache connus sont soit impossibles à enlever (il faut les détruire, les casser), soit trop faciles à enlever, occasionnant un risque de perte de la trappe, ou encore trop difficiles à monter pour les opérateurs en usine.

Parmi les géométries classiques de ce type d'ancre imperdable, on peut citer les ancres « en losange » dont les branches ont tendance à s'écarter et s'arc-bouter lors de l'assemblage de l'ancre et les ancres en « V simple » ou « sapin / flèche » (sans raccordement des extrémités du V) dont les branches ont tendance à s'écarter lors du désassemblage de l'ancre imperdable.

On connaît également du document FR 1 663 132 un élément d'attache pour cordon de retenue d'une trappe d'obturation d'une ouverture formée dans une paroi d'une pièce de carrosserie, l'élément d'attache comprenant une extrémité d'insertion dans un logement, et une extrémité opposée à l'extrémité d'insertion. L'élément d'attache comporte :
- au moins deux bras d'assemblage liés par une de leurs extrémités au niveau de l'extrémité d'insertion, et formant sensiblement un V ;
- au moins deux bras parallèles entre eux, reliés à l'extrémité opposée de l'élément d'attache, et apte à se rapprocher l'un de l'autre lors de l'insertion de l'élément d'attache dans le logement.

Cette solution permet d'améliorer le compromis assemblage/désassemblage de l'élément d'attache de la trappe par rapport à la paroi, de sorte que l'assemblage soit facile pour les opérateurs et que le désassemblage soit difficile sans pour autant détruire l'élément d'attache. En effet, une force comprise entre 10 N et 30 N permet le montage et une force entre 20 et 60N permet le démontage de sorte que l'effort de désassemblage soit environ 2 fois supérieur à l'effort d'assemblage. Il est donc possible de monter et démonter plusieurs fois la trappe, car l'élément d'attache n'est pas détruit lors du démontage.

Néanmoins, malgré les améliorations qu'il apporte, l'élément d'attache de FR 1 663 132 présente l'inconvénient, du fait de sa géométrie particulière, d'être relativement encombrante et de ne pouvoir s'adapter à tous les environnements de trappe. On connaît également le document FR 2 921 624 A1 qui divulgue un dispositif de retenue d'une trappe d'obturation selon le préambule de la revendication 1.

L'invention a pour but de remédier aux inconvénients de l'art antérieur en fournissant un système d'attache qui permet d'améliorer le compromis montage/démontage de la trappe par rapport à la paroi, de sorte que le montage soit facile pour les opérateurs et que le démontage soit difficile sans pour autant détruire l'élément d'attache, et qui soit suffisamment compacte.

A cet effet, l'invention concerne un dispositif de retenue d'une trappe d'obturation d'une ouverture formée dans une paroi d'une pièce de carrosserie selon la revendication 1.

Le bossage constitue ainsi un point dur, qui, une fois passé dans la fente, empêche le retrait de l'extrémité de l'élément d'attache, à moins d'exercer à nouveau un effort important de sortie dans le sens opposé à l'insertion.

Grâce au fait que l'extrémité d'insertion soit munie ou prolongé d'un bossage, dont le passage dans le logement provoque la déformation réversible d'une paroi délimitant la fente ou de l'extrémité d'insertion de sorte à retenir l'extrémité d'insertion dans le logement, il n'est plus nécessaire que l'élément d'attache comprenne deux paires de bras successives dans le sens de sa longueur. Ainsi, l'élément d'attache peut être de plus petites dimensions, c'est-à-dire plus compact. En particulier, on peut réduire la longueur de l'élément d'attache d'un facteur trois.

L'élément d'attache peut ainsi s'adapter à de nombreux environnements différents de trappes de dimensions et de formes variées. Ceci est en particulièrement utile pour éviter certains obstacles tels que l'absorbeur de chocs situé à proximité de la trappe.

De manière à permettre de réduire encore davantage les dimensions de l'élément d'attache, la déformation a lieu selon la direction de la petite dimension de la fente, la dimension de l'extrémité d'insertion au niveau du bossage étant plus grande que la petite dimension de la fente.

Toujours afin de faciliter l'insertion et le retrait du bossage dans la fente, l'élément d'attache comprend un corps sensiblement allongé et rectiligne, le contour de l'extrémité d'insertion formant sensiblement un V.

Pour faciliter la préhension de l'élément d'attache par un utilisateur, l'élément d'attache étant de forme sensiblement plane, il comprend un corps, comprenant une extrémité de l'élément d'attache opposée à l'extrémité d'insertion, l'extrémité d'insertion formant un prolongement du corps, le corps étant de forme allongée, et de préférence sensiblement rectangulaire.

Selon un mode de réalisation particulier de l'invention, l'extrémité d'insertion est reliée au corps au niveau des extrémités des bras du V par des voiles flexibles.

La présence des voiles permet de guider l'élément d'attache lors de son retrait du logement, et participe au centrage de l'extrémité d'insertion dans la fente.

L'épaisseur des voiles est de préférence inférieure à celle du reste de l'extrémité d'insertion, de manière à faciliter la torsion de l'extrémité d'insertion lorsque c'est elle qui se déforme lors de son insertion dans la fente.

Pour faciliter encore davantage la préhension de l'élément d'attache, le corps peut être muni d'une portion de préhension augmentant localement sa largeur, le contour de la portion de préhension étant de préférence sensiblement circulaire.

De préférence, le bossage est disposé à la jonction entre le corps et l'extrémité d'insertion.

Le bossage est placé avantageusement au niveau de la jonction, pour ne pas gêner l'insertion de l'extrémité d'insertion dans la fente. L'opérateur comprendra que l'insertion est correctement réalisée lorsque le bossage entrera au contact de la fente.

Selon un mode particulier de réalisation de l'invention, l'élément d'attache s'étendant sensiblement selon un plan, l'extrémité d'insertion de l'élément d'attache comprend deux parois opposées, chaque paroi étant munie d'au moins une protubérance, les protubérances de chaque paroi étant disposées sur les parois de façon symétrique par rapport au plan selon lequel s'étend l'élément d'attache.

Ce mode de réalisation est particulièrement adapté à l'alternative de l'invention selon laquelle la paroi de la fente se déforme sous l'effet du passage des protubérances dans la fente.

Selon un autre mode particulier de réalisation de l'invention, l'élément d'attache s'étendant sensiblement selon un plan, l'extrémité d'insertion de l'élément d'attache comprend deux première et deuxième parois opposées, la première paroi étant munie d'au moins une première protubérance et la deuxième paroi étant munie d'au moins deux deuxièmes protubérances, la projection orthogonale de ladite au moins une première protubérance de la première paroi sur un plan selon lequel s'étend l'élément d'attache s'étend n'étant pas confondue avec les projections orthogonales desdites au moins deux deuxièmes protubérances sur ce plan.

Ce mode de réalisation est particulièrement adapté à l'alternative de l'invention selon laquelle l'extrémité d'insertion se déforme sous l'effet du passage des protubérances dans la fente. En effet, grâce au positionnement particulier des protubérances, lors de l'insertion de l'extrémité d'insertion dans la fente, c'est l'extrémité d'insertion qui est déformée sous l'effet d'un effort de torsion autour d'un axe normal au plan de la fente. De préférence, l'élément d'attache comprenant une extrémité opposée à l'extrémité d'insertion, l'élément d'attache comprend un axe de symétrie passant par ces deux extrémités. Ceci permet de limiter les contraintes dans le sens de l'insertion de l'extrémité d'insertion dans la fente.

Afin de faciliter la déformation réversible de l'extrémité d'insertion, les deuxièmes protubérances sont disposées sur la deuxième paroi de part et d'autre de l'axe de symétrie et la première protubérance est disposée sur l'axe de symétrie.

L'élément d'attache et/ou la paroi délimitant de la fente est de préférence constitué d'un matériau choisi seul ou en combinaison parmi les matériaux suivants : polypropylène (PP), polycarbonate (PC), polytéréphtalate de butylène (PBT), et acrylonitrile butadiène styrène (ABS).

Ces matériaux sont en effet bien adaptés pour obtenir une déformation réversible de la paroi et/ou de l'élément d'attache.

L'invention concerne également une trappe d'obturation d'une ouverture formée dans une paroi d'une pièce de carrosserie qui comporte un dispositif de retenue selon l'invention.

L'invention sera mieux comprise à la lecture des figures annexées, qui sont fournies à titre d'exemples et ne présentent aucun caractère limitatif, dans lesquelles :
- la figure 1 est une vue schématique en perspective d'une pièce de carrosserie comportant une ouverture formée dans une paroi de la pièce, ainsi qu'une trappe d'obturation comportant un dispositif de retenue selon un mode de réalisation particulier de l'invention, ;
- la figure 2 est une vue schématique en perspective de la trappe de la figure 1 munie d'un cordon de retenue ;
- la figure 3 est une vue en perspective d'un élément d'attache du cordon de la figure 1 ;
- la figure 4 est une vue de face de l'élément d'attache de la figure 3
- la figure 5A est une vue en coupe de l'élément selon la ligne de coupe A-A indiquée sur la figure 4 ;
- la figure 6 est une vue en perspective d'un logement dont est muni la paroi de la pièce de carrosserie de la figure 1 et de l'élément d'attache de la figure 3 inséré dans le logement ;
- la figure 7 est une vue en coupe de la figure 6 selon le plan VII-VII ;
- la figure 8 est une en coupe du logement de la figure 7 selon la ligne de coupe G-G dans une première configuration;
- la figure 9 est une vue similaire à la figure 8, le logement étant dans une deuxième configuration de déformation d'une des parois délimitant la fente ;
- la figure 10 est une vue en coupe partielle du logement de la figure 7 selon la ligne de coupe H.
- la figure 11A est une vue en perspective d'un élément d'attache d'un dispositif de retenue selon un deuxième mode de réalisation de l'invention ;
- la figure 11B est une vue similaire à la figure 11A, selon un autre angle de vue.
- la figure 12 est une vue de face de l'élément d'attache de la figure 3
- la figure 13 est une vue en coupe de l'élément d'attache selon la ligne de coupe B-B indiquée sur la figure 12 ;
- la figure 14 est une vue en perspective d'un logement dont est muni la paroi de la pièce de carrosserie de la figure 1 et de l'élément d'attache de la figure 11A inséré dans le logement ;
- la figure 15 est une vue en coupe de la figure 14 selon le plan XIII-V-XIII ;
- la figure 16 est une en coupe du logement de la figure 15 selon la ligne de coupe D-D dans une première configuration;
- la figure 17 est une vue similaire à la figure 16, le logement étant dans une deuxième configuration de déformation de l'extrémité d'insertion ;
- la figure 18 est une vue en coupe partielle du logement de la figure 15 selon la ligne de coupe E ;

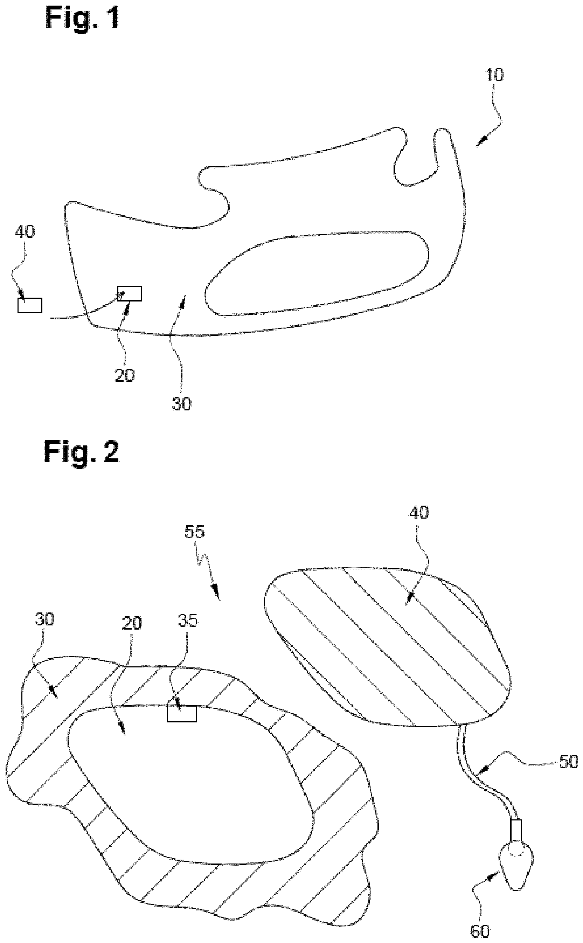

La figure 1 illustre une pièce 10 de carrosserie comportant une ouverture 20 formée dans une paroi 30 de la pièce de carrosserie 10, ainsi qu'une trappe 40 d'obturation de l'ouverture 20.

La figure 2 illustre en détail la trappe 40 d'obturation qui comporte un cordon 50 de retenue permettant de maintenir la trappe 40 attachée à la pièce 10, même lorsque la trappe 40 n'obture plus l'ouverture 20.

La paroi 30 et la trappe 40 sont munies d'un dispositif de retenue 55 de la trappe 40 à la paroi 30. Ce dispositif de retenue 55 comprend un logement 35 présent sur la paroi 30, et la trappe 40 est munie d'un cordon 50 comportant un élément d'attache 60 apte à coopérer avec le logement 35 de manière à relier le cordon 50 de retenue sur la paroi 30.

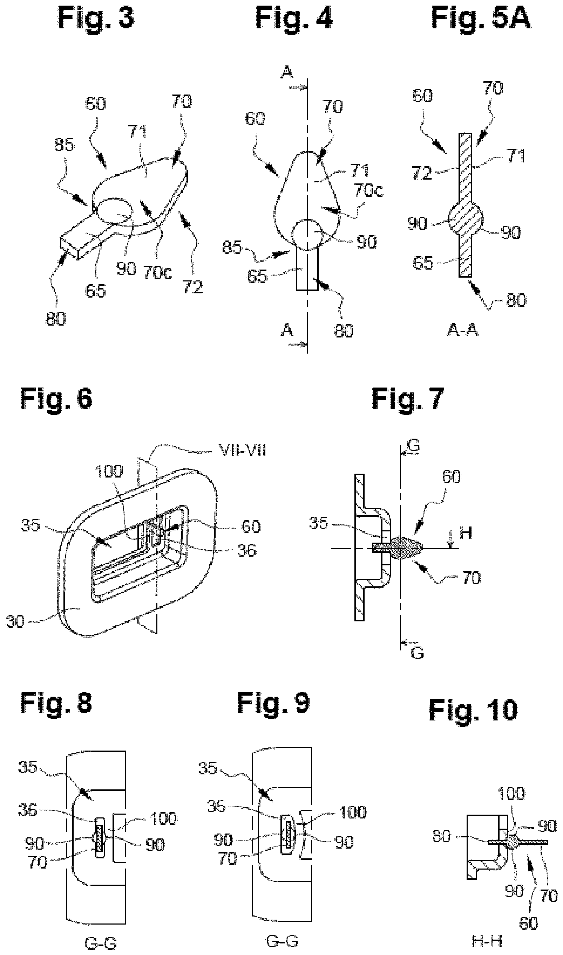

On se réfère maintenant aux figures 3 à 5 qui illustrent en détail un exemple d'un élément d'attache 60 selon un premier mode de réalisation de l'invention.

L'élément d'attache 60 présente une forme allongée, s'étendant sensiblement selon un plan. L'élément d'attache comprend notamment un corps 65 sensiblement allongé et rectiligne, ainsi qu'une extrémité d'insertion 70, destinée à être insérée dans le logement 35, en l'occurrence dans une fente 36 de celui-ci, comme on le verra plus loin. Le corps 65 est de forme allongée, son contour étant sensiblement rectangulaire. L'extrémité 70 forme un prolongement du corps 65, et est de préférence venu de matière avec celui-ci. L'extrémité 70 comprend une zone centrale 70C délimitée par au moins deux parois opposées 71, 72 sensiblement planes et parallèles entre elles.

L'élément d'attache 60 comprend une extrémité 80 de préhension opposée à l'extrémité d'insertion, qui est en l'occurrence l'extrémité du corps 65 opposée à l'extrémité d'insertion 70. C'est par cette extrémité de préhension 80 que l'utilisateur va saisir l'élément d'attache 60.

L'élément d'attache 60 comprend un axe de symétrie passant par ces deux extrémités. Cet axe de symétrie est ici représenté en pointillés sur la figure 4. Le fait que l'élément d'attache 60 possède un axe de symétrie passant par ses deux extrémités permet de limiter les contraintes dans le sens de l'insertion de l'extrémité d'insertion 70 dans la fente.

L'extrémité d'insertion 70 est également sensiblement plane et son contour est en forme de V. Dans l'exemple de réalisation de l'invention représenté aux figures 3 à 5, le V est légèrement arrondi.

La jonction 85 entre l'extrémité d'insertion 70 et le corps 65 est de forme sensiblement arrondie, de sorte que l'ensemble formé par l'extrémité d'insertion 70 et la jonction 85 possède un contour en forme de poire.

L'extrémité d'insertion 70 est munie d'au moins un relief 90 faisant varier localement son épaisseur de sorte que, lors de l'insertion de l'extrémité d'insertion 70 dans la fente 36 du logement 36, le passage du relief 90 provoquant la déformation réversible de la paroi ou de l'extrémité d'insertion, de sorte à retenir l'extrémité d'insertion dans la fente 36 comme il sera expliqué plus loin.

Dans les modes de réalisation représentés aux figures 1 à 18, le ou les reliefs 90 sont des protubérances.

De préférence, la protubérance 90 est disposée à la jonction 85 entre le corps 65 et l'extrémité d'insertion 70. Cela permet avantageusement de ne pas gêner l'insertion de l'extrémité d'insertion 70 dans la fente. L'opérateur comprendra que l'insertion est correctement réalisée lorsque la protubérance 90 entrera au contact de la fente.

Conformément à l'invention et afin de faciliter l'insertion et le retrait de la protubérance 90 dans la fente 36, la protubérance est un bossage, c'est-à-dire est une demi-sphère faisant saillie à partir de l'extrémité d'insertion 70. Le bossage 90 fait saillie à partir d'une paroi plane 71 de l'extrémité d'insertion 70, avec lequel il est, de préférence, venu de matière.

Comme on peut le voir à la figure 5A, l'extrémité d'insertion 70 de l'élément d'attache comprend deux parois opposées 71, 72 chaque paroi étant munie d'au moins une protubérance 90, les protubérances de chaque paroi 71, 72 étant disposées sur les parois de façon symétrique par rapport au plan selon lequel s'étend l'élément d'attache 60. Cette symétrie représente un avantage lors de l'insertion de l'élément d'attache 60, qui ne présente ainsi pas de sens de montage.

Cependant, on pourrait également envisager qu'il n'y ait qu'une protubérance sur une seule des parois 71, 72 opposées de l'extrémité d'insertion 70, ou encore que chacune des parois opposées 71, 72 de l'extrémité d'insertion 70 soit sur les parois de façon symétrique par rapport au plan selon lequel s'étend l'élément d'attache 60.

On va maintenant décrire, en référence aux figures 6 à 10, l'interaction entre le logement 35 et l'élément d'attache 60.

On a représenté à la figure 7 un exemple de logement 35 dont est munie la paroi 30 délimitant l'ouverture 20 fermée par un dispositif de retenue 10 selon un premier mode de réalisation de l'invention.

Le logement 35 comporte une fente 36, de section sensiblement rectangulaire, et à ce titre délimitée par quatre parois parallèles deux à deux. Dans d'autres modes de réalisation de l'invention, la fente pourrait avoir une section ovale.

La fente s'étend sensiblement selon deux dimensions, dont une est plus grande que l'autre de plusieurs facteurs. Ici, la grande dimension de la fente s'étend, par rapport au sol sur lequel roule le véhicule, selon la verticale, et la petite dimension selon l'horizontale. On pourrait cependant envisager l'inverse.

Les dimensions de l'élément d'attache 60 sont prévues de sorte que l'extrémité d'insertion 70 puisse être insérée dans la fente, comme illustré sur la figure 7.

A ce titre, l'épaisseur de l'extrémité d'insertion, c'est-à-dire l'écartement entre les deux parois 71, 72 opposées de l'extrémité d'insertion 70 en l'occurrence, est prévue de sorte à sensiblement correspondre à l'écartement entre les parois délimitant la fente, de préférence selon sa plus petite dimension, avec un léger jeu.

Les protubérances 90 sont réalisées de sorte que l'épaisseur de l'extrémité d'insertion 70 au niveau des protubérances 90 soit plus grande que la petite dimension de la fente. Ceci est notamment illustré aux figures 8 et 10.

Lors de l'insertion de l'extrémité d'insertion 70 dans la fente 36, le passage des protubérances 90 provoquent la déformation réversible d'une des parois 100 de la fente 36 de sorte à retenir l'extrémité d'insertion dans la fente 36. Ceci est illustré à la figure 9. Dans les exemples représentés sur les figures, de manière à permettre de réduire encore davantage les dimensions de l'élément d'attache, la déformation a lieu selon la direction de la petite dimension de la fente 36.

Les protubérances 90 sont configurées de façon à former un point dur dans le sens de désassemblage de l'élément d'attache 60. Les protubérances permettent d'éviter que la force à exercer dans la direction et le sens de désassemblage ne conduise à une sortie directe de l'élément d'attache 60 du logement 35 (comme c'est le cas avec un élément d'attache en forme de losange notamment).

Ainsi, le démontage est difficile sans pour autant devoir détruire l'élément d'attache 60 pour démonter le cordon 50. L'effort de démontage est important et avec un point dur, de sorte que l'opérateur doit fournir un pic d'effort plus important qu'au montage pour détacher la trappe 40 de la paroi 30.

Grâce à cette configuration, le montage et le démontage peuvent être répétés, de sorte qu'il n'est pas nécessaire de détruire l'élément d'attache 60 et/ou le logement 35 lors du démontage de l'élément d'attache 60 du logement 35.

Pour autant, l'élément d'attache 60 peut être de petites dimensions, puisque le point dur est constitué par une surépaisseur de l'extrémité d'insertion et non par des éléments s'étendant dans le sens de la longueur de l'élément d'attache 60.

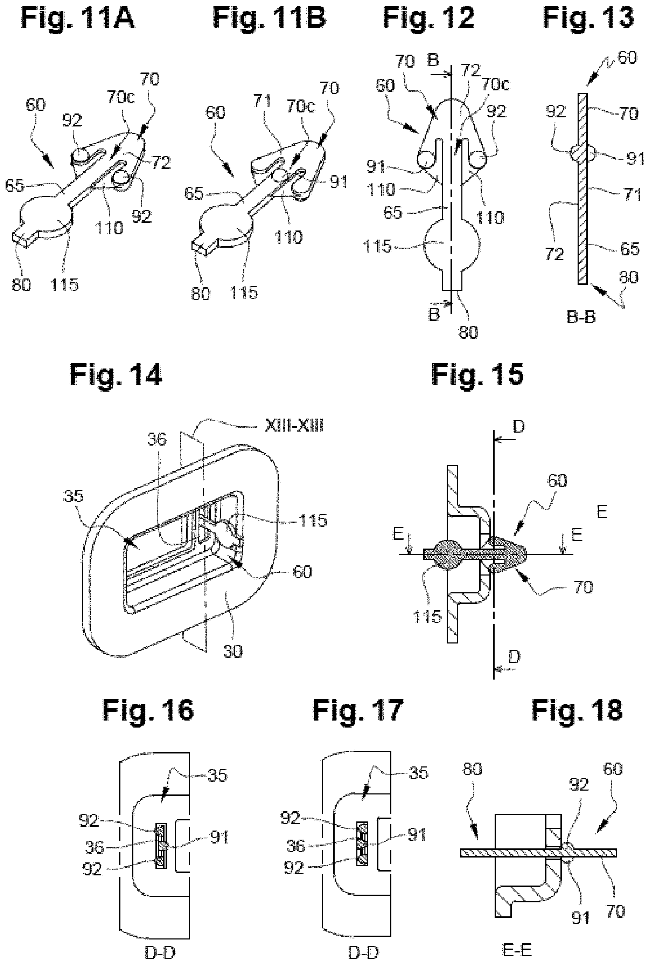

Selon un deuxième mode de réalisation de l'invention illustré aux figures 11A à 18, ce n'est plus une des parois 100 délimitant la fente 36 qui se déforme lors de l'insertion de l'élément d'attache 60 dans la fente 36, mais l'extrémité d'insertion 70 de l'élément d'attache 60.

Dans ce deuxième mode de réalisation, l'extrémité d'insertion 70 est également de forme sensiblement plane comprend deux première 71 et deuxième 72 parois opposées, et est munie d'au moins une protubérance 90 faisant varier localement son épaisseur.

Cependant, à la différence du mode de réalisation illustré aux figures 1 à 10, la première paroi 71 opposée de l'extrémité d'insertion 70 est munie d'au moins une première protubérance 91 et la deuxième paroi opposée 72 est munie d'au moins deux deuxièmes protubérances 92. La projection orthogonale de la première protubérance 91 de la première paroi 71 sur un plan selon lequel s'étend l'élément d'attache 60 n'est pas confondue avec les projections orthogonales des deux deuxièmes protubérances 92 sur ce plan.

Du fait de ce positionnement particulier des protubérances 90, lors de l'insertion de l'extrémité d'insertion 70 dans la fente 36, c'est l'extrémité d'insertion 70 qui est déformée sous l'effet d'un effort de torsion autour d'un axe normal au plan de la fente. Ceci est notamment visible aux figures 16 et 17.

De préférence, afin de faciliter la torsion de l'extrémité d'insertion 70, les deuxièmes protubérances 92 sont disposées sur la deuxième paroi 72 de part et d'autre de l'axe de symétrie et la première protubérance 91 est disposée sur la première paroi 71 sur l'axe de symétrie de l'élément d'attache 60.

Par ailleurs, dans ce deuxième mode de réalisation, l'élément d'attache 60 comprend là aussi un corps sensiblement allongé et rectiligne, prolongé par une extrémité d'insertion 70 dont le contour forme sensiblement un V.

Toutefois, à la différence du mode de réalisation des figures 1 à 7, l'extrémité d'insertion 70 est reliée au corps au niveau des extrémités 105 des bras du V par des voiles flexibles 110. La présence de ces voiles 110 permet de guider l'élément d'attache 60 lors de son retrait du logement, et participe au centrage de l'extrémité d'insertion dans la fente 60.

L'épaisseur des voiles 110 est de préférence inférieure à celle du reste de l'extrémité d'insertion (épaisseur comptée entre les première et deuxième parois 71, 72), facilitant ainsi la torsion de l'extrémité d'insertion 70.

Pour faciliter encore davantage la préhension de l'élément d'attache, le corps 65 est muni d'une portion de préhension 115, le contour de la portion de préhension 115 étant sensiblement circulaire. La portion de préhension 115 augmente ainsi localement la largeur du corps 65. La portion de préhension 115 est située du côté de l'extrémité opposée 80 à l'extrémité d'insertion 70, ou extrémité de préhension 80. On notera que cette portion de préhension 115 peut également être présente sur le corps 65 de l'élément d'attache 60 selon le premier mode de réalisation de l'invention. En outre, dans d'autres modes de réalisation, le contour de la portion de préhension peut varier, et peut-être par exemple de forme carrée, du moment qu'elle augmente localement la largeur du corps 65.

L'invention concerne également un cordon de retenue 50 pour trappe d'obturation 40 d'une ouverture 20 formée dans une paroi 30 d'une pièce de carrosserie 10. Le cordon 50 comporte à l'une de ses extrémités un élément d'attache 60 selon l'invention, apte à coopérer avec un logement 35 présent sur la paroi 30 de manière à relier le cordon 50 de retenue sur la paroi 30.

L'invention concerne également une trappe d'obturation 40 d'une ouverture 20 formée dans une paroi 30 d'une pièce de carrosserie 10. La trappe 40 comporte un cordon selon l'invention, notamment muni à l'une de ses extrémités d'un élément d'attache 60 selon l'invention.

Selon un exemple de réalisation, l'élément d'attache 60 et/ou la paroi 100 délimitant la fente est réalisé en matière plastique telle que : polypropylène (PP), un mélange de polycarbonate (PC) et de polytéréphtalate de butylène (PBT), un mélange de polycarbonate (PC) et d'acrylonitrile butadiène styrène (ABS), etc.

La longueur de l'élément d'attache est de préférence limitée à 10mm de long, ce qui permet une intégration particulièrement aisée de l'élément d'insertion dans divers environnements de trappes de véhicule.

L'invention n'est pas limitée aux modes de réalisation présentés et d'autres modes de réalisation apparaîtront clairement à l'homme du métier. Il est notamment possible que l'élément d'attache ne possède pas d'axe de symétrie. L'élément d'attache peut en effet, par exemple, correspondre à une seule des deux moitiés délimitées par cet axe de symétrie.

### Liste des références

- 10 :: pièce de véhicule automobile
- 20 :: ouverture formée dans une paroi de la pièce 10
- 30 :: paroi de la pièce 10 contenant l'ouverture 20
- 35 :: logement présent sur la paroi 30 de manière à relier le cordon 50 de retenue sur la paroi 30
- 36 :: fente du logement
- 40 :: trappe d'obturation de l'ouverture 20.
- 50 :: cordon de retenue permettant de maintenir la trappe 40 attachée à la pièce 10
- 55 :: dispositif de retenue
- 60 :: élément d'attache du cordon 50, apte à coopérer avec le logement 35
- 65 :: corps de l'élément d'attache
- 70 :: extrémité d'insertion de l'élément d'attache 60 du cordon 50
- 70C :: zone centrale de l'extrémité d'insertion
- 71 :: première paroi de l'extrémité d'insertion 70
- 72 :: deuxième paroi de l'extrémité d'insertion 70
- 80 :: extrémité de préhension
- 85 :: jonction entre le corps 65 et l'extrémité d'insertion 70
- 90 :: protubérance de l'extrémité d'insertion 70
- 91 :: premières protubérances
- 92 :: deuxièmes protubérances
- 100 :: paroi déformable de la fente
- 110 :: voiles
- 115 :: portion de préhension

## Revendications

1. Dispositif de retenue (55) d'une trappe d'obturation (40) d'une ouverture (20) formée dans une paroi (30) d'une pièce de carrosserie (10), comprenant :
- un logement (35) présent sur la paroi (30) muni d'une fente délimitée par au moins une paroi, et
- un élément d'attache (60) pour cordon de retenue (50) de la trappe d'obturation apte à coopérer avec le logement (35), l'élément d'attache (60) comprenant une extrémité d'insertion apte à être insérée dans le logement (35), l'extrémité d'insertion (70) comprenant une zone centrale (70C) délimitée par au moins deux parois (71, 72) opposées, la zone centrale (70C) étant munie d'un, ou prolongée par, au moins un relief (90, 91, 92, 120) de sorte que, lors de l'insertion de l'extrémité d'insertion (70) dans la fente, le passage du relief (90, 91, 92, 120) provoque la déformation réversible d'au moins une paroi (100) délimitant la fente (36) ou de l'extrémité d'insertion (70) de sorte à retenir l'extrémité d'insertion (70) dans la fente (35), **caractérisé en ce que** le relief est une demi-sphère appelée bossage (90, 91, 92), faisant saillie à partir de l'extrémité d'insertion (70) et faisant varier localement l'épaisseur de ladite extrémité d'insertion (70).

2. Dispositif de retenue (55) selon la revendication 1, dans lequel la déformation a lieu selon la direction de la petite dimension de la fente (36), la dimension de l'extrémité d'insertion (70) au niveau du bossage (90, 91, 92) étant plus grande que la petite dimension de la fente (36).

3. Dispositif de retenue (55) selon la revendication 1 ou 2, dans lequel, l'élément d'attache comprend un corps (65) sensiblement allongé et rectiligne, le contour de l'extrémité d'insertion (70) formant sensiblement un V.

4. Dispositif de retenue (55) selon l'une quelconque des revendications précédentes, dans lequel l'élément d'attache (60) étant de forme sensiblement plane, il comprend un corps (65), comprenant une extrémité (80) de l'élément d'attache opposée à l'extrémité d'insertion (70), l'extrémité d'insertion (70) formant un prolongement du corps (65), le corps (65) étant de forme allongée, et de préférence sensiblement rectangulaire.

5. Dispositif de retenue (55) selon les revendications 3 et 4, dans lequel l'extrémité d'insertion (70) est reliée au corps au niveau des extrémités des bras du V par des voiles flexibles (110).

6. Dispositif de retenue (55) selon la revendication 4 ou 5, dans lequel le corps (65) est muni d'une portion de préhension (115) augmentant localement sa largeur, le contour de la portion de préhension étant de préférence sensiblement circulaire.

7. Dispositif de retenue (55) selon la revendication 4, dans lequel le bossage (90, 91, 92) est disposé à la jonction (85) entre le corps (65) et l'extrémité d'insertion (70).

8. Dispositif de retenue (55) selon l'une quelconque des revendications précédentes, dans lequel, l'élément d'attache s'étendant sensiblement selon un plan, l'extrémité d'insertion de l'élément d'attache comprend deux parois opposées, chaque paroi étant munie d'au moins une protubérance, les protubérances de chaque paroi étant disposées sur les parois de façon symétrique par rapport au plan selon lequel s'étend l'élément d'attache.

9. Dispositif de retenue (55) selon l'une quelconque des revendications précédentes, dans lequel, l'élément d'attache (60) s'étendant sensiblement selon un plan, l'extrémité d'insertion (70) de l'élément d'attache (60) comprend deux première (71) et deuxième parois (72) opposées, la première paroi (71) étant munie d'au moins une première protubérance (91) et la deuxième paroi (72) étant munie d'au moins deux deuxièmes protubérances (92), la projection orthogonale de ladite au moins une première protubérance (91) de la première paroi (71) sur un plan selon lequel s'étend l'élément d'attache (60) s'étend n'étant pas confondue avec les projections orthogonales desdites au moins deux deuxièmes protubérances (92) sur ce plan.

10. Dispositif de retenue (55) selon l'une quelconque des revendications précédentes, dans lequel l'élément d'attache (60) comprenant une extrémité opposée (80) à l'extrémité d'insertion (70), l'élément d'attache (60) comprend un axe de symétrie passant par ces deux extrémités (70, 80).

11. Dispositif de retenue (55) selon les revendications 9 et 10, dans lequel les deuxièmes protubérances (92) sont disposées sur la deuxième paroi (72) de part et d'autre de l'axe de symétrie et la première protubérance (91) est disposé sur l'axe de symétrie.

12. Dispositif de retenue selon l'une quelconque des revendications précédentes, dans lequel l'élément d'attache (60) et/ou la paroi (100) délimitant la fente (36) est, constitué d'un matériau choisi seul ou en combinaison parmi les matériaux suivants : polypropylène (PP), polycarbonate (PC), polytéréphtalate de butylène (PBT), et acrylonitrile butadiène styrène (ABS).

13. Trappe d'obturation (40) d'une ouverture (20) formée dans une paroi (30) d'une pièce de carrosserie (10), **caractérisée en ce qu'**elle comporte un dispositif de retenue (55) selon l'une quelconque des revendications précédentes.

## Patentansprüche

1. Haltevorrichtung (55) für eine Verschlussklappe (40) einer Öffnung (20), die in einer Wand (30) eines Karosserieteils (10) ausgebildet ist, aufweisend:
- eine an der Wand (30) vorhandene Aufnahme (35), die mit einem Schlitz versehen ist, der von mindestens einer Wand begrenzt wird, und
- ein Befestigungselement (60) für eine Rückhalteschnur (50) der Verschlussklappe, das geeignet ist, mit der Aufnahme (35) zusammenzuwirken, wobei das Befestigungselement (60) ein Einsteck-Ende umfasst, das geeignet ist, in die Aufnahme (35) eingesteckt zu werden, das Einsteck-Ende (70) einen zentralen Bereich (70C) umfasst, der von mindestens zwei gegenüberliegenden Wänden (71, 72) begrenzt wird, wobei der zentrale Bereich (70C) mit mindestens einer Erhebung (90, 91, 92, 120) versehen ist oder durch diese verlängert wird, so dass, beim Einführen des Einsteck-Endes (70) in den Schlitz der Durchgang der Erhebung (90, 91, 92, 120) eine reversible Verformung mindestens einer den Schlitz (36) begrenzenden Wand (100) oder des Einsteck-Endes (70) bewirkt, so dass das Einsteck-Ende (70) in dem Schlitz (36) gehalten wird, **dadurch gekennzeichnet, dass** das Relief eine Halbkugel ist, die als Vorwölbung (90, 91, 92) bezeichnet wird, wobei das Relief von dem Einsteck-Ende (70) vorsteht und die Dicke des Einsteck-Endes (70) lokal variiert.

2. Haltevorrichtung (55) nach Anspruch 1, bei der die Verformung in Richtung der kleinen Abmessung des Schlitzes (36) erfolgt, wobei die Abmessung des Einsteck-Endes (70) an der Vorwölbung (90, 91, 92) größer ist als die kleine Abmessung des Schlitzes (36).

3. Haltevorrichtung (55) nach Anspruch 1 oder 2, wobei das Befestigungselement einen im Wesentlichen länglichen und geradlinigen Körper (65) aufweist, wobei die Kontur des Einsteck-Endes (70) im Wesentlichen ein V bildet.

4. Haltevorrichtung (55) nach einem der vorhergehenden Ansprüche, wobei das Befestigungselement (60) eine im Wesentlichen ebene Form hat und einen Körper (65) aufweist, der ein Ende (80) des Befestigungselements gegenüber dem Einsteck-Ende (70) aufweist, wobei das Einsteck-Ende (70) eine Verlängerung des Körpers (65) bildet, wobei der Körper (65) eine längliche Form hat und vorzugsweise im Wesentlichen rechteckig ist.

5. Haltevorrichtung (55) nach Anspruch 3 und 4, wobei das Einsteck-Ende (70) an den Enden der V-Arme durch flexible Segel (110) mit dem Körper verbunden ist.

6. Haltevorrichtung (55) nach Anspruch 4 oder 5, bei der der Körper (65) mit einem Greifabschnitt (115) versehen ist, der seine Breite lokal vergrößert, wobei die Kontur des Greifabschnitts vorzugsweise im Wesentlichen kreisförmig ist.

7. Haltevorrichtung (55) nach Anspruch 4, wobei die Vorwölbung (90, 91, 92) an der Verbindungsstelle (85) zwischen dem Körper (65) und dem Einsteck-Ende (70) angeordnet ist.

8. Haltevorrichtung (55) nach einem der vorhergehenden Ansprüche, wobei sich das Befestigungselement im Wesentlichen in einer Ebene erstreckt, wobei das Einsteck-Ende des Befestigungselements zwei gegenüberliegende Wände aufweist, wobei jede Wand mit mindestens einer Vorwölbung versehen ist, wobei die Vorwölbungen jeder Wand an den Wänden symmetrisch zu der Ebene, in der sich das Befestigungselement erstreckt, angeordnet sind.

9. Haltevorrichtung (55) nach einem der vorhergehenden Ansprüche, wobei sich das Befestigungselement (60) im Wesentlichen in einer Ebene erstreckt, wobei das Einsteck-Ende (70) des Befestigungselements (60) zwei einander gegenüberliegende erste (71) und zweite Wände (72) aufweist, wobei die erste Wand (71) mit mindestens einer ersten Vorwölbung (91) versehen ist und die zweite Wand (72) mit mindestens zwei zweiten Vorwölbungen (92) versehen ist, wobei die orthogonale Projektion der mindestens einen ersten Vorwölbung (91) der ersten Wand (71) auf eine Ebene, in der sich das Befestigungselement (60) erstreckt, nicht mit den orthogonalen Projektionen der mindestens zwei zweiten Vorwölbungen (92) auf diese Ebene zusammenfällt.

10. Haltevorrichtung (55) nach einem der vorhergehenden Ansprüche, wobei das Befestigungselement (60) ein dem Einsteck-Ende (70) gegenüberliegendes Ende (80) aufweist, wobei das Befestigungselement (60) eine Symmetrieachse aufweist, die durch diese beiden Enden (70, 80) verläuft.

11. Haltevorrichtung (55) nach Anspruch 9 und 10, wobei die zweiten Vorwölbungen (92) an der zweiten Wand (72) auf beiden Seiten der Symmetrieachse angeordnet sind und die erste Vorwölbung (91) auf der Symmetrieachse angeordnet ist.

12. Haltevorrichtung nach einem der vorhergehenden Ansprüche, wobei das Befestigungselement (60) und/oder die Wand (100), die den Schlitz (36) begrenzt, aus einem Material besteht, das allein oder in Kombination aus den folgenden Materialien ausgewählt ist: Polypropylen (PP), Polycarbonat (PC), Polybutylenterephthalat (PBT) und Acrylnitril-Butadien-Styrol (ABS).

13. Verschlussklappe (40) einer Öffnung (20), die in einer Wand (30) eines Karosserieteils (10) ausgebildet ist, **dadurch gekennzeichnet, dass** sie eine Haltevorrichtung (55) nach einem der vorhergehenden Ansprüche aufweist.

## Claims

1. Retaining device (55) for retaining a shutter (40) of an opening (20) formed in a wall (30) of a bodywork part (10), comprising:
- a housing (35) present on the wall (30) provided with a slot defined by at least one wall, and
- an attachment member (60) for a cord (50) for retaining the which attachment member is capable of cooperating with the housing (35), the attachment member (60) comprising an insertion end (70) which can be inserted into the housing (35),
the insertion end (70) comprising a central area (70C) defined by at least two opposite walls (71, 72), the central area (70C) being provided with, or extended by, at least one relief (90, 91, 92, 120) such that, when inserting the insertion end (70) into the slot, the passage of the relief (90, 91, 92, 120) causes at least one wall (100) defining the slot (36), or the insertion end (70), to be reversibly deformed so as to retain the insertion end (70) in the slot (35), **characterized in that** the relief is a half-sphere named boss (90, 91, 92), protruding from the insertion end (70) and making the thickness of said insertion end locally vary (70).

2. Retaining device (55) according to claim 1, wherein the deformation occurs along the direction of the small dimension of the slot (36), the dimension of the insertion end (70) proximate the boss level (90, 91, 92) being larger than the small dimension of the slot (36).

3. Retaining device (55) according to claim 1 or 2, wherein the attachment member comprises a substantially elongated and rectilinear body (65), the contour of the insertion end (70) forming substantially a V.

4. Retaining device (55) according to any one of the preceding claims, wherein, the attachment member (60) being substantially flat in shape, it comprises a body (65), comprising one end (80) of the attachment member opposite the insertion end (70), the insertion end (70) forming an extension of the body (65), the body (65) being elongated in shape, and preferably substantially rectangular.

5. Retaining device (55) according to claims 3 and 4, wherein the insertion end (70) is connected to the body at the ends of the arms of the V by flexible webs (110).

6. Retaining device (55) according to claim 4 or 5, wherein the body (65) is provided with a gripping portion (115) locally increasing its width, the contour of the gripping portion being preferably substantially circular.

7. Retaining device (55) according to claim 4, wherein the boss (90, 91, 92) is arranged at the junction (85) between the body (65) and the insertion end (70).

8. Retaining device (55) according to any one of the preceding claims, wherein, the attachment member extending substantially according to a plane, the insertion end of the attachment member comprises two opposite walls, each wall being provided with at least one protrusion, the protrusions of each wall being arranged on the walls symmetrically with respect to the plane according to which the attachment element extends.

9. Retaining device (55) according to any one of the preceding claims, wherein, the attachment member (60) extending significantly according to a plane, the insertion end (70) of the attachment member (60) comprises two first (71) and second opposite walls (72), the first wall (71) being provided with at least one first protrusion (91) and the second wall (72) being provided with at least two second protrusions (92), the orthogonal projection of said at least one first protrusion (91) of the first wall (71) on a plane according to which the attachment element extends (60) does not coincide with the orthogonal projections of said at least two second protrusions (92) on this plane.

10. Retaining device (55) according to any one of the preceding claims, wherein, the attachment member (60) comprising an opposite end (80) at the insertion end (70), the attachment member (60) comprises an axis of symmetry passing through these two ends (70, 80).

11. Retaining device (55) according to claims 9 and 10, wherein the second protrusions (92) are arranged on the second wall (72) on either side of the axis of symmetry and the first protrusion (91) is arranged on the axis of symmetry.

12. Retaining device according to any one of the preceding claims, wherein the attachment member (60) and/or the wall (100) delimiting the slot (36) is constituted of a material selected from any of the following materials, alone or in combination : polypropylene (PP), polycarbonate (PC), polybutylene terephthalate (PBT), and acrylonitrile butadiene styrene (ABS).

13. Shutter (40) of an opening (20) formed in a wall (30) of a bodywork part (10), **characterized in that it** comprises a retaining device (55) according to any one of the preceding claims.
